# EUROPEAN PATENT APPLICATION

(11) **EP 4 831 108 A1**
(43) Date of publication of application: **28.10.2026**
(21) Application number: 25179101.8
(22) Date of filing: 27.05.2025
(51) Int. Cl.: B66C 13/52, B60K 5/10, B66C 13/54, B66C 23/40, B66C 23/42, B66C 23/62

(54) **4X4 WHEELED KNUCKLE BOOM CRANE**

(30) Priority: 22.04.2025 TR 2025004901
(71) Applicant: Erkin Ismakinalari Insaat Sanayi Ithalat Ihracat Ticaret Pazarlama Limited Sirketi, 09930 Aydin (TR)
(72) Inventor: ERKIN, BAHTIYAR, AYDIN (TR)
(74) Representative: Yamankaradeniz, Kemal

(57) **Abstract**

The invention is a crane vehicle (10) developed for use in various sectors such as construction sites, building sites, factory assembly, power plants, wherein; it comprises a cabin (11) manufactured as a whole with the crane tower (12), which can rotate 180 degrees around the vertical axis so that the operator can see and control both the carrier vehicle and the crane tower (12), a crane tower (12), which performs the lifting function of the crane vehicle (10) and works together with the operator's cabin (11), which is manufactured as a whole for carrying loads, a chassis (16) carrying all structural components of the crane vehicle (10), a modular engine compartment (15) detachably connected to the side of the chassis (16) for the mounting of the engine.

## Description

### Technical Field

The invention relates to a rubber-wheeled, self-propelled, knuckle boom crane vehicle with integrated crane and carrier structure, low-profile chassis, offering high maneuverability, allowing driving and crane operation to be controlled from a single cabin, especially suitable for working in narrow spaces, equipped with an electro-hydraulic locking mechanism that increases safety, and improved stabilization capacity.

### State of Art

Knuckle boom crane systems used today are generally mounted on standard carrier vehicles. For example, truck-mounted knuckle boom cranes are used by different manufacturers, requiring adaptation to carrier vehicles produced to certain standards. These types of crane systems are typically mounted on 3-axle or 4-axle trucks, with limited maneuverability depending on the design of the carrier vehicle. Especially when working in narrow spaces, the mobility of the carrier vehicle is restricted due to its wide turning diameter, which makes it difficult to use in narrow spaces such as factory work areas, tunnels, and mines.

In addition, since the crane and carrier vehicle are designed as separate units in the present systems, crane adaptation must be made according to different truck models and manufacturers. This requires additional engineering work and assembly adaptations for crane manufacturers, increasing costs and assembly times. At the same time, the integration of the crane and carrier vehicle specifically for each model complicates the maintenance and service processes and leads to access difficulties in case of possible malfunction or maintenance.

Another important problem in the present crane systems is that the cabins that provide crane operation and the driving of the carrier vehicle are positioned separately. This structure limits the operator's field of vision and reduces work efficiency. Although some crane systems have rotating cabin mechanisms, the locking systems of these mechanisms are usually provided only by hydraulic braking mechanisms. However, leaks or sudden impacts that may occur in hydraulic systems may cause unwanted movements of the cabin and ring gear. Such situations pose a risk to both the operator and the occupational safety of the surrounding area.

In addition, stability is also an important issue in the present crane systems. Stabilizer systems used to ensure balance during operation generally operate at certain angles, and losses in lifting capacity may occur in certain directions during crane movement.

Finally, since the drive systems and engine compartments of cranes are usually integrated into the carrier vehicle, it may be necessary to disassemble the entire crane or the relevant carrier vehicle for maintenance and repair of the engine. This situation prolongs service and maintenance processes and reduces operational efficiency.

In order to solve problems such as maneuvering difficulties and imbalances during load carrying experienced in the present crane systems, studies were carried out on the integration between the carrier vehicle and the crane, ease of manipulation and development of designs suitable for road carrying limits. One of these studies is the invention which is the subject of the patent application numbered US3664516 (A) and titled "Knuckle Boom Crane". The said crane can be carried on the carrier vehicle with the knuckle boom and hooks. This design is distributed evenly across the front and rear of the vehicle to provide high maneuverability. A truck-mounted, fully knuckle boom for material handling and similar work, carrying a boom and hook at least 100 feet long within reasonable highway limitations when in the carrying position. Although this patent allows the crane boom to be more compact during transport by being foldable, it does not focus on maneuverability when working in narrow spaces. It only improves stability in the transport position and offers a limited solution to increase manoeuvrability. This patent focuses only on the portability of the foldable boom, and does not offer a solution such as full integration with the carrier vehicle or designing the chassis of the carrier vehicle integrally with the crane. There is also no solution to the height of the crane design. Height issues still exist in terms of crane portability, especially in narrow spaces or around obstacles such as tunnels.

For these reasons, a new crane carrier system is needed that offers high maneuverability in narrow spaces, optimizes the integration of the carrier vehicle and crane, increases operator safety and facilitates maintenance processes. As a result, the need for a rubber-tired, self-propelled knuckle boom crane vehicle that eliminates the disadvantages of the present art and the inadequacy of existing solutions have necessitated a development in the relevant technical field.

### Brief Description of the Invention

The present invention relates to a rubber-wheeled, self-propelled, knuckle boom crane vehicle with integrated crane and carrier structure, low-profile chassis, offering high maneuverability, allowing driving and crane operation to be controlled from a single cabin, especially suitable for working in narrow spaces, equipped with an electro-hydraulic locking mechanism that increases safety, and having improved stabilization capacity, meeting the above-mentioned requirements, eliminating all disadvantages and bringing some additional advantages.

The object of the invention, based on the known state of the art, is to design the crane and carrier vehicle as a whole, to perform safe and efficient operation using special hydraulic and mechanical systems, to develop a compact and highly maneuverable crane vehicle that can be used in areas such as construction, construction sites, factory assembly and power plants with high maneuverability even in narrow spaces, and to operate efficiently and safely even in difficult terrain conditions.

The object of the invention is to provide the ability to work even in difficult terrain conditions, in areas where normal truck-mounted cranes cannot go, thanks to the 4X4 rubber-tired, self-propelled knuckle boom crane.

Another object of the invention is to provide efficient use in limited areas by providing the ability to maneuver easily in narrow spaces thanks to its compact structure.

Another object of the invention is to obtain a more compact and durable structure by manufacturing the crane and carrier as a whole, thus ensuring that the carrier and crane systems operate harmoniously and safely.

Another object of the invention is to provide high maneuverability in narrow spaces thanks to the steering of the front and rear axles, allowing operations to be carried out quickly and without damaging the environment.

Another object of the invention is to have a lower structure than normal truck-mounted cranes, thanks to its specially designed chassis and crane section, thus ensuring easy passage through areas with height obstacles.

Another object of the invention is to increase the operator's working safety by providing maximum visibility during driving and crane operations, thanks to the cabin that can rotate 180 degrees.

Another object of the invention is to increase the vehicle's curve ability during driving and to prevent possible accidents, especially to prevent greater safety risks in case of possible hydraulic leaks or impacts, by means of fixing the ring gear of the cabin and the crane with the locking mechanism.

Another object of the invention is to ensure the safe integration between the crane and the cabin and to perform more precise operations by means of moving the cabin and the ring gear with the hydraulic system.

Another object of the invention is to prevent undesirable situations during operation and to provide additional security measures by ensuring security even in case of possible leaks or impacts in the hydraulic system, thanks to being equipped with a physical lock system.

Another object of the invention is to create a stable and safe working environment from all angles during crane work by providing 360-degree capacity thanks to its specially designed chassis and six stabilizers.

Another object of the invention is that, thanks to the special design of the system driven by a diesel engine, the engine can be mounted from outside and later installed on the machine, thus ensuring that the engine is quickly and easily accessible both during production and during maintenance, repair and service operations.

The structural and characteristic features of the invention and all its advantages will be understood more clearly thanks to the figures given below and the detailed description written by making references to these figures, therefore the evaluation needs to be made by taking these figures and detailed descriptions into consideration.

### Brief Description of Figures

In order to best understand the structure of the present invention and its advantages together with the additional elements, it needs to be evaluated together with the figures described below.
Figure-1 is the schematic general view of the crane vehicle from the side,
Figure-2 is the schematic general view of the crane vehicle from the front,
Figure-3 is the schematic general view of the crane vehicle from the back,
Figure-4 is the front left perspective view of the crane vehicle,
Figure-5 is the schematic general view of the tower locking pin on the chassis,
Figure-6 is the schematic general view of the cabin locking pin and engine compartment on the chassis,
Figure-7 is the schematic general view of the chassis from above,
Figure-8 is the schematic general view of the crane vehicle in working position,
Figure-9 is the schematic general view of the cabin rotation system.

### Reference Numbers

10. Crane vehicle
11. Cabin
12. Crane tower
13. Tower locking pin
14. Cabin locking pin
15. Engine compartment
16. Chassis
17. Cabin rotation mechanism

### Detailed Description of the Invention

In this detailed description, the rubber-wheeled, self-propelled, knuckle boom crane vehicle (10) with integrated crane tower (12) and low profile chassis (16), which is the subject of the invention, offers high maneuverability, allows driving and crane operation to be controlled from a single cabin (11), is especially suitable for working in narrow spaces, is equipped with an electro-hydraulic locking mechanism that increases safety, and has improved stabilization capacity, and is described only as an example for a better understanding of the subject and does not form any limiting effect.

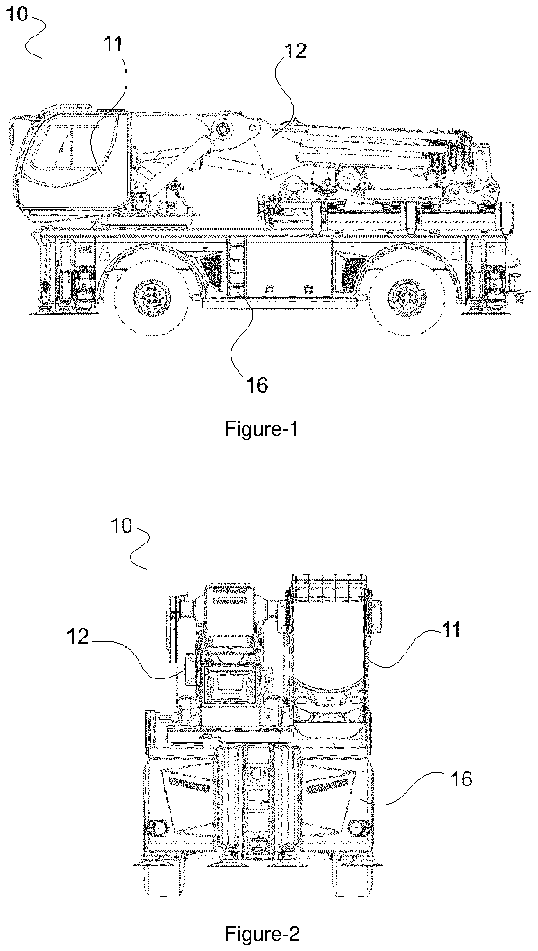

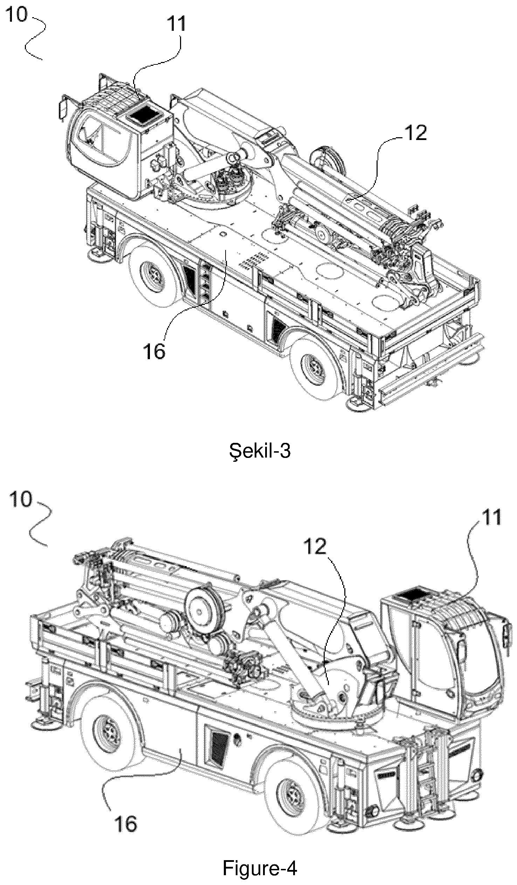

The invention shown in Figure-1 is a 4X4 rubber-tired, self-propelled and knuckle boom crane vehicle (10). The said crane vehicle (10) is designed to be used in various sectors such as construction sites, building sites, factory assembly, and power plants. Its ability to be used in particularly difficult terrain conditions makes it superior to the present truck-mounted cranes. Thanks to the compact structure of the invention, it offers easy maneuverability in narrow spaces. In addition, manufacturing the crane tower (12) and chassis (16) as a whole, shown in Figure 2, makes its use more efficient.

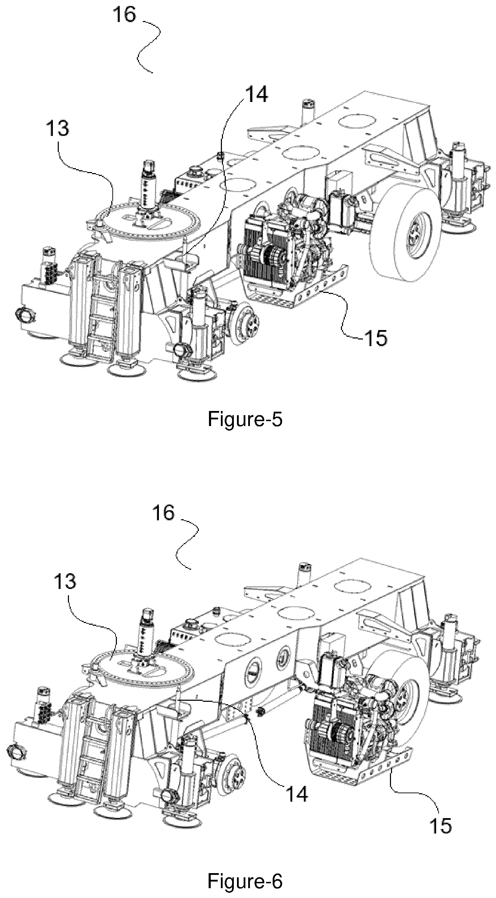

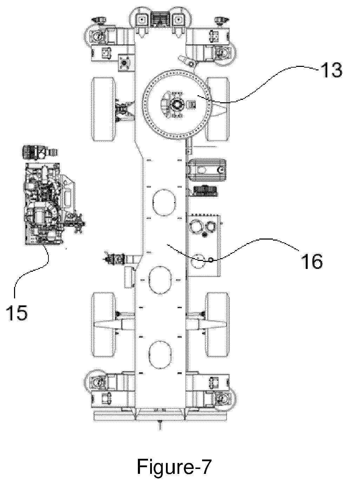

The crane vehicle (10) shown in Figure-3 comprises a cabin (11) that can rotate 180 degrees around the vertical axis to enable the operator to control both the carrier vehicle and the crane tower (12), providing a safe and efficient working area, a crane tower (12) that performs the lifting function of the crane vehicle (10) and works together with the operator cabin (11) to enable the transport of loads, an engine compartment (15) that has a modular structure that facilitates the assembly of the engine and speeds up maintenance operations, and supports the efficient operation of the crane vehicle (10) by being fixed to the chassis (16), and a chassis (16) that carries all the structural components of the crane vehicle (10) and ensures the stability of the entire system. The cabin (11) shown in Figure-4 is an important element that allows the operator to control the vehicle and the crane. The cabin (11) is designed to rotate 180 degrees around the vertical axis. This feature allows the operator to see both the carrier part and the crane tower (12) part easily. The cabin (11) is mounted on the crane tower (12) and operates movably during operation. There is also a cabin rotation system (17) that enables the cabin (11) to rotate. The cabin rotation mechanism (17) allows the cabin (11) to rotate smoothly and the operator to see the entire area easily. The crane tower (12) allows the crane vehicle (10) to have a lower structure than the present systems. In this way, the crane vehicle (10) can work easily without any obstacles regarding height. The crane tower (12) has a structure where the cabin (11) is mounted. The lower design of the crane tower (12) allows it to move more easily in narrow spaces. The tower locking pin (13) shown in Figure 5 is an important safety mechanism that prevents the crane tower (12) from moving during driving. The said tower locking pin (13) locks the crane tower (12) and prevents it from turning right/left during curves. Similarly, the cabin locking pin (14) shown in Figure-6 fixes the cabin (11) during driving and prevents the cabin (11) from moving on curves. The said tower locking pin (13) and cabin locking pin (14) ensure safety by increasing the stability of the crane vehicle (10) during driving. The engine compartment (15) shown in Figure-7 is a specially designed and modular structured component. The said engine compartment (15) is connected to the side of the chassis (16) with the help of connection elements. The engine compartment (15) facilitates easy installation of the engine and maintenance when necessary. The assembly of the engine to the chassis (16) is very easy thanks to the specially designed cavities. In addition, the ability to mount the engine compartment (15) outside allows service and maintenance operations to be carried out quickly and practically. The chassis (16) is the most important structural component of the carrier section of the crane vehicle (10). The chassis (16) is specially designed with a cavity for easy installation of the engine. In addition, it has a very solid structure so that the crane tower (12) can operate without any loss of capacity. The chassis (16) can be used even in the most difficult terrain conditions thanks to its rigid structure during driving. The chassis (16) is the main platform that provides the fixing of all elements and is therefore of great importance for the safety and efficiency of the crane vehicle (10).

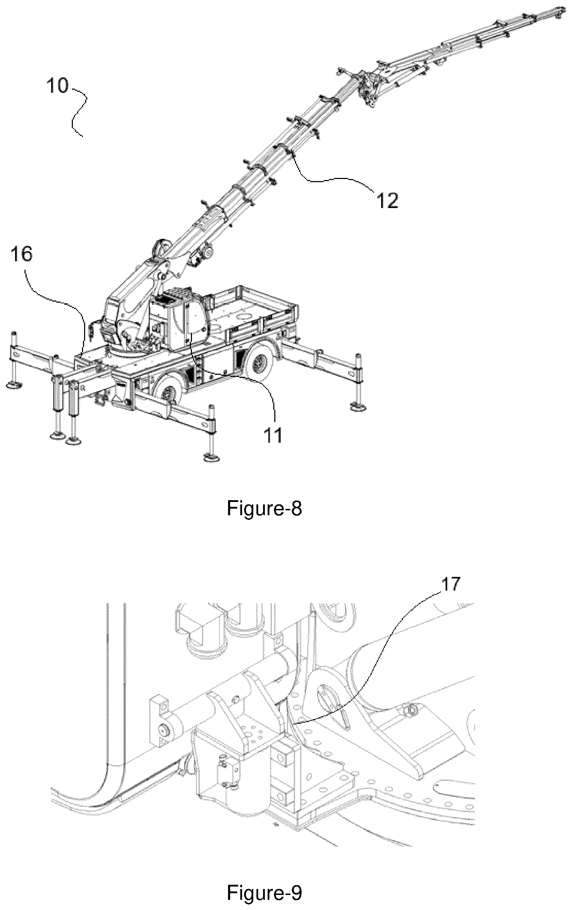

The feature of the said crane vehicle (10) is that it is a whole with the cabin (11) and the crane tower (12) integrated into the carrier part containing the chassis (16). This integrity must be maintained for the proper operation of the crane vehicle (10). The cabin (11) can rotate 180 degrees around the vertical axis. Thus, both the carrier and the crane tower (12) can be controlled from the cabin (11). The crane tower (12) shown in Figure 8 is in working position, with the cabin (11) rotated 180 degrees. The crane tower (12) is designed lower than normal. This allows the crane vehicle (10) to have a ground clearance of approximately 3-4 meters when in road position. This ensures that it has a lower structure than similar machines. The cabin (11) system is also mounted on the crane tower (12). The cabin rotation mechanism (17) shown in Figure 9 is mounted on the crane tower (12). The engine compartment (15) can be separated from the crane vehicle (10) if desired.

## Claims

1. A crane vehicle (10) developed for use in various sectors such as construction sites, building sites, factory assembly, power plants, ***characterized by comprising;***
- a cabin (11) manufactured as a whole with a crane tower (12), which can rotate 180 degrees around the vertical axis so that the operator can see and control both the carrier vehicle and the crane tower (12);
- the crane tower (12), which performs the lifting function of the crane vehicle (10), working together with the operator's cabin (11), which is manufactured as a single unit for transporting loads;
- a chassis (16) carrying all structural components of the crane vehicle (10);
- a modular engine compartment (15) detachably connected to the side of the chassis (16) for mounting the engine.

2. A crane vehicle (10) according to claim 1, ***characterized by comprising;*** a cabin rotation mechanism (17) mounted on the crane tower (12) to rotate the cabin (11) so that the operator can easily see the entire area.

3. A crane vehicle (10) according to claim *1, **characterized by comprising;*** a tower locking pin (13) that locks the crane tower (12) to fix it during driving and prevent it from turning right/left on curves.

4. A crane vehicle (10) according to claim *1, **characterized by comprising;*** a cabin locking pin (14) that locks the cabin (11) to fix it during driving and prevent it from moving on curves.

5. A crane vehicle (10) according to claim *1, **characterized by comprising;*** a cavity formed on the side of the chassis (16) for the mounting of the engine.

6. A crane vehicle (10) according to claim *1, **characterized in that;*** 4x4 rubber-wheeled, self-propelled and has a knuckle boom.
